# EUROPEAN PATENT APPLICATION

(11) **EP 4 704 000 A1**
(43) Date of publication of application: **04.03.2026**
(21) Application number: 25180020.7
(22) Date of filing: 30.05.2025
(51) Int. Cl.: G06Q 10/101, G06Q 10/1093, H04L 12/18, H04L 65/403, G06Q 10/10

(54) **INTEGRATING EXTERNAL CONTENT SHARING INTO SCHEDULED NETWORK-BASED MEETINGS**

(30) Priority: 27.08.2024 US 202418816725
(71) Applicant: Microsoft Technology Licensing, LLC, Redmond, WA 98052-6399 (US)
(72) Inventor: MAYURAM KRITHIVASAN, Shanmathi, Redmond, 98052-6399 (US); CHUG, Vikramjit Singh, Redmond, 98052-6399 (US); SHARMA, Manasi, Redmond, 98052-6399 (US); KAUR, Kanchan, Redmond, 98052-6399 (US); SURI, Manpratap, Redmond, 98052-6399 (US); WU, Ashley, Redmond, 98052-6399 (US)
(74) Representative: Page White Farrer

(57) **Abstract**

A system and method for integrating external content sharing into scheduled network-based meetings is disclosed. The system comprises a meeting service that receives a request from a client device for future-scheduled meetings, presents meeting options, and receives a selection of a meeting and content reference. The meeting service updates the meeting record with the content reference, performs validation checks, and enables seamless content presentation during the meeting. The method includes receiving meeting data requests, presenting future meetings, receiving meeting and content selections, updating meeting records, validating content sharing applications, and facilitating content presentation during meetings. This solution streamlines content sharing workflows, enhances meeting preparation, and improves collaboration efficiency in network-based meeting environments.

## Description

### TECHNICAL FIELD

The present application pertains to the technical field of network-based meeting management systems, specifically focusing on server-side operations for facilitating content sharing in future-scheduled meetings. The application describes techniques for a meeting server to manage the integration of external content items into already scheduled network-based meetings through a content sharing interface. These techniques enable end-users to select future-scheduled meetings and associate content items with those meetings, prior to their occurrence.

### BACKGROUND

In the modern digital landscape, communication and collaboration have become predominantly virtual, facilitated by a variety of digital platforms and services that allow individuals and teams to interact seamlessly across geographical boundaries. These digital platforms and services host meetings, webinars, and collaborative sessions, enabling real-time and asynchronous exchanges of ideas and information. The effectiveness of such interactions often hinges on the ability to share and discuss content, ranging from documents and presentations, programming code, files, to multimedia resources, including video and audio streams and files. As the complexity and frequency of network-based meetings increase, participants and organizers are continually seeking more efficient ways to manage and interact with content during these sessions.

### BRIEF DESCRIPTION OF THE DRAWINGS

Embodiments of the present invention are illustrated by way of example and not limitation in the figures of the accompanying drawings, in which:
FIG. 1 is a block diagram illustrating an example system for enabling external content sharing into meetings, in accordance with embodiments of the present invention.
FIG. 2 is a block diagram illustrating components of an example meeting service, in accordance with embodiments of the present invention.
FIG. 3 is a diagram illustrating an example user interface for initiating content sharing to a meeting from an external application, in accordance with embodiments of the present invention.
FIG. 4 is a diagram illustrating an example user interface for selecting a future-scheduled meeting to share content with, in accordance with embodiments of the present invention.
FIG. 5 is a diagram illustrating an example user interface for presenting shared content during a meeting, in accordance with embodiments of the present invention.
FIG. 6 is a flow diagram illustrating an example method for enabling external content sharing into meetings, in accordance with embodiments of the present disclosure.
FIG. 7 is a block diagram illustrating components of a computing device that may be used in certain implementations described herein.
FIG. 8 is a block diagram illustrating components of a machine able to read instructions from a machine-readable medium and perform any of the methodologies discussed herein.

### DETAILED DESCRIPTION

Described herein are techniques for managing content sharing in future-scheduled network-based meetings, specifically focusing on server-side operations of an online or cloud-based meeting service, which improve the efficiency with which content can be shared and enhance user interaction and collaboration. The present disclosure outlines techniques implemented by a meeting server to facilitate the association of externally hosted content with upcoming meetings prior to their occurrence. These techniques enable end-users to select future-scheduled meetings through a content sharing interface and embed references to diverse types of content, such as documents, videos, and interactive applications, directly into meeting records. The meeting server performs operations including receiving requests for meeting data, presenting future-scheduled meetings, updating meeting records with content references, and validating application installations for content sharing. By automating the process of content integration and providing streamlined access within the meeting environment, the described techniques significantly enhance the efficiency of meeting preparation and execution. The server-side operations detailed herein are particularly advantageous for digital communication platforms where seamless content integration and ease of access are important for effective collaboration. In the following description, for purposes of explanation, numerous specific details of the meeting server's functionality are set forth to provide a thorough understanding of the embodiments of the present invention.

In today's workplace, seamless collaboration and efficient content sharing are important for productive network-based meetings. However, current network-based meeting platforms often lack streamlined methods for integrating external content, particularly into meetings that have already been scheduled, leading to inefficient preparation and disjointed meeting experiences. Conventional meeting services face significant technical challenges when it comes to sharing externally hosted content items during meetings, particularly for future-scheduled meetings. These challenges stem from the limitations of existing systems in seamlessly integrating external content into the meeting environment. One technical problem arises from the disjointed nature of content sharing through external channels. When users attempt to share content via email, instant messaging, or file sharing services separate from the meeting platform or service, it creates a fragmented user experience. This approach lacks integration with the meeting service's infrastructure, leading to inefficiencies in content discovery and access. For example, meeting participants may struggle to locate shared content among numerous email threads or chat messages, resulting in wasted time and reduced productivity before, during and after a network-based meeting.

Another technical issue emerges when users try to manually edit meeting invitations, after the meeting invitations have been sent, to include content references. This method is problematic due to the temporal disconnect between meeting scheduling and content preparation. Meeting organizers often do not have all relevant content ready at the time of creating the invitation. As a result, they must repeatedly modify the invitation, triggering multiple updates to all meeting participants and potentially causing confusion or missed information. Furthermore, this approach places the burden on each meeting participant to manually identify and launch the appropriate application to access the shared content, leading to potential compatibility issues and increased cognitive load.

From a technical perspective, these conventional methods fail to leverage the capabilities of modern meeting services. They do not utilize the meeting service's ability to manage and present content within its native environment, missing opportunities for enhanced collaboration and interactivity. For instance, a video sharing scenario illustrates this problem: if a user wants to share a video from an external platform during a future-scheduled meeting, current systems often require the user to remember to share the link during the meeting, switch contexts to the external platform, and then use screen sharing to present the content. This process is cumbersome and prone to errors, especially in fast-paced meeting environments.

Moreover, these conventional approaches do not address the need for seamless content integration across different devices and platforms. As meetings increasingly involve participants using various devices and operating systems, the lack of a standardized, platform-agnostic method for content sharing becomes a significant technical hurdle.

Consistent with some embodiments of the present invention, a technical solution to the aforementioned technical problems is provided in the form of a system that seamlessly integrates client devices, content servers, and a meeting service to facilitate the sharing of externally hosted content in future-scheduled meetings. This system enables users to easily select and associate content with upcoming meetings, ensuring that the content is readily available when the meeting starts. The process begins on a client device, where a user interacts with content associated with an application. The content may be hosted on the client device, or hosted on a remote, network-connected device that is accessible to the client device. A content sharing interface, typically in the form of a "Share to Meeting" button, is presented within the application's user interface. When the user selects this button, they are presented with a list of upcoming scheduled meetings, allowing them to choose the appropriate meeting for content sharing.

Upon selecting a future meeting, the client device communicates key information to the meeting service, including a meeting ID of the selected meeting, an application ID associated with the application used in accessing the content item, and a content reference. The content reference can take various forms to allow a device on the network to locate and download the item efficiently. A Uniform Resource Locator (URL) pointing to the content on a web server is a common method. However, in various embodiments the system may support multiple addressing mechanisms to accommodate different storage systems and application architectures. These can include file pathnames within shared network drives or cloud storage systems, which provide direct access to files in collaborative environments. Unique identifiers or keys associated with content in a content management system offer another approach, allowing for efficient retrieval of items from structured repositories. For more complex scenarios, the content reference might be a database query string, enabling dynamic content retrieval from structured data stores. In cases where programmatic access is required, an API endpoint with specific parameters can serve as the content reference, facilitating automated content fetching. For distributed or peer-to-peer systems, a content hash or fingerprint might be used to locate items across a network. Additionally, some applications may use a combination of application-specific identifiers, such as document IDs and version numbers, to precisely specify the content to be shared. This versatility in content referencing mechanisms ensures that the system can integrate seamlessly with various content sources and storage paradigms, enhancing its utility across different organizational and technological contexts.

Upon receiving the data from the client device, the meeting service initiates a comprehensive set of pre-meeting operations to ensure seamless content sharing during the future-scheduled meeting. The meeting service updates the meeting record with the content reference, which may include various addressing mechanisms such as URLs, file pathnames, or unique identifiers. This update allows for efficient retrieval of the content before the meeting commences.

The meeting service then performs a validation check for the content sharing application, verifying that it is properly registered and authorized for use within the meeting environment. This step ensures that only approved applications can be used for content sharing, maintaining security and compatibility standards.

To optimize performance, the meeting service may preload the content, particularly for large files or media that require buffering. This preloading process ensures that the content is readily accessible at the start of the meeting, minimizing delays and improving the user experience. The service also updates permissions and access controls specific to the shared content. This crucial step ensures that only authorized participants can access or interact with the content during the meeting, maintaining confidentiality and adhering to organizational security policies.

Additionally, the meeting service verifies that all necessary integrations and plugins required for presenting the content are in place and functional. For instance, if a specific application like YouTube^{®} is needed, the service ensures that the required app or plugin is integrated and operational within the meeting environment.

As part of its security measures, the meeting service may perform a scan of the content for malware or any malicious elements, especially if the content is hosted externally. This security scan helps protect all meeting participants from potential cyber threats.

The service also prepares notifications and alerts that can be sent to meeting participants about the newly added content, particularly if it is added well in advance of the meeting. These notifications keep all participants informed and prepared for the upcoming content discussion.

Finally, the meeting service synchronizes all this information across its components, including the meeting management component and the content management component, ensuring that all systems are prepared for the seamless integration and presentation of the shared content when the meeting begins.

When the meeting begins, the meeting service takes additional actions to facilitate content sharing. It initializes the meeting environment, including necessary infrastructure for video, audio, and data transmission, when appropriate. It activates required applications and plugins, configures the user interface to present the shared content and necessary controls, and opens a side panel by default for a user who shared the content item, providing easy access to the shared content item. During the meeting, the meeting service manages the presentation of shared content, handles real-time data exchange, enforces access controls, and provides moderation tools to the meeting host. It also enables the utilization of the content reference to present the content item and receives control signals for content presentation from client devices, such as may be required to play, pause, skip ahead, with a slide presentation, video or audio item.

This solution addresses the key problems of conventional systems by eliminating the need for users to remember to share content during the meeting or switch contexts to external platforms. It reduces the cognitive load on participants by automatically preparing and presenting the shared content. Furthermore, it leverages the meeting service's capabilities to manage and present content within its native environment, enhancing collaboration and interactivity. By providing a standardized, platform-agnostic method for content sharing across different devices and operating systems, the solution creates a more efficient, user-friendly experience for sharing and accessing external content in future-scheduled meetings. These and other advantages will be readily apparent from the description of the several figures that follows.

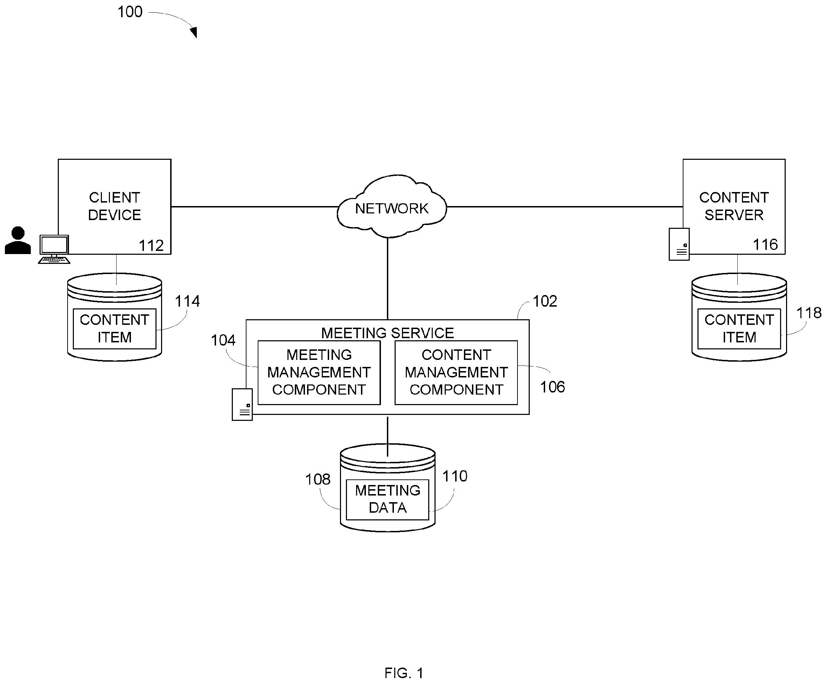

FIG. 1 illustrates a system 100 for integrating external content sharing into scheduled network-based meetings, consistent with some embodiments. The system 100 comprises several components that work together to enable seamless content sharing for future-scheduled meetings. The meeting service 102 includes two primary components: the meeting management component 104 and the content management component 106. The meeting management component 104 is responsible for establishing and managing meetings, while the content management component 106 handles content integration and retrieval of shared content data.

The system 100 interacts with a client device 112, operated by an end-user. The client device 112 may have access to a locally stored content item 114, which is stored in a storage device of the client device 112. Alternatively, the user may interact with a client application, such as a web browser or network-based application, to access, view or interact with a content item 128 that is stored remotely at a storage device 116 and served via a content server 124 hosted on a server device.

In either scenario, the user interacts with the interface of an application where a user interface control element, referred to as a content sharing control interface, is embedded within the user interface. This control element may be presented as a button, which, when selected, expands to present various selections. When the user selects this control, a request is communicated to the meeting service 102 for data relating to any future scheduled meetings of the user.

Before the request is processed, the user may need to be authenticated. This authentication process can be facilitated using OAuth or similar services, ensuring secure access to the user's meeting data. Once authorized, the request is communicated from the client device 112 to the meeting service 102.

Upon receiving the authenticated request, the content management component 106 of the meeting service 102 uses the user's ID (communicated with the request) to obtain information about any future-scheduled meetings for which the user is a host or has content sharing privileges. This component is responsible for retrieving and managing meeting-related data, as opposed to the meeting management component 104, which is primarily used to establish the meeting in the first place.

The meeting service 102 then returns the data relating to the future-scheduled meetings to the client device 112, which presents the information to the user via the content sharing interface of the application that is being used to access, view or otherwise interact with the content item (e.g., 114 or 118). The end-user is prompted to select a future-scheduled meeting at which the content item is to be shared.

In some implementations, the user may be prompted to provide or select additional parameters for content sharing. This could include designating a specific application to use in sharing the content. The user might also be asked to specify one or more other meeting participants who are to have control access to the content. This feature allows selected meeting participants to be presented with a special user interface during the meeting, enabling them to control and/or navigate the shared content item.

The meeting service 102 maintains meeting data 110, which is stored in a database structure 108. This data includes information about scheduled meetings and associated content references. When a user selects a future-scheduled meeting and associates a content item with it, the meeting service 102 processes this request, updating the meeting data 110 to include a reference to the content item 128 stored on the content server 116 or the locally stored content item 114.

This architecture enables the system to prepare content for future meetings, ensuring that when the meeting starts, the shared content is readily available for sharing and presentation without requiring additional steps from the meeting participants. The seamless integration between the client device 112, content server 116, and meeting service 102 addresses the technical challenges of conventional systems by providing a standardized, efficient method for sharing external content in future-scheduled meetings.

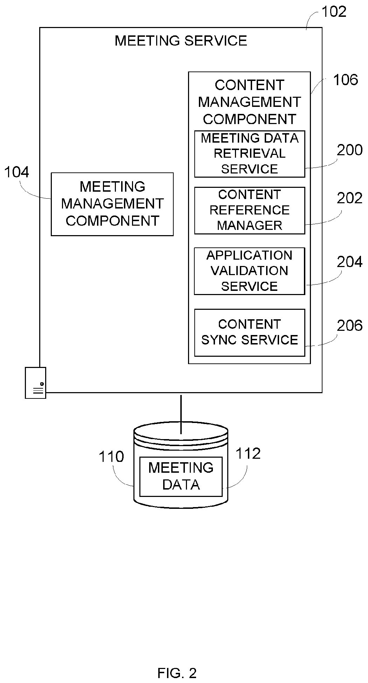

FIG. 2 illustrates a detailed view of the meeting service 102, which forms an important component of the system for integrating external content sharing into scheduled network-based meetings. The meeting service 102 comprises several interconnected components that work in concert to manage meetings and facilitate content sharing. As shown in FIG. 2, the meeting service 104 is divided into two primary components: the meeting management component 104 and the content management component 106.

The meeting management component 104 is responsible for overseeing the overall meeting operations, including scheduling meetings, sending out meeting invitations, and performing various operations to facilitate meetings at the scheduled time. This component handles aspects such as managing audio and video connections and streaming, archiving meeting content, and generating transcripts. These functionalities ensure a seamless meeting experience for all participants, from the initial scheduling to the conclusion of the meeting.

The content management component 106 focuses on the intricate aspects of content handling within the meeting context. It is further subdivided into four specialized services, each serving a distinct purpose in the content sharing process. The meeting data retrieval service 200 is tasked with processing requests for data regarding future-scheduled meetings. Upon receiving a request, it uses the user ID provided to perform a lookup operation, finding any future-scheduled meetings for which the user is a host or has content sharing privileges. This service ensures that users can efficiently access and manage their upcoming meetings and associated content.

The content reference manager 202 plays a role in managing the references to content items associated with meetings. In some examples, it adds the reference of a content item to a meeting record and then processes the reference by obtaining a copy of the content item in some instances. This service ensures that the content item is stored in the appropriate location for immediate presentation to meeting participants at the start of a meeting.

The content reference manager's functionality extends beyond simple reference storage. When processing a content reference, it may retrieve and cache the actual content, depending on factors such as file size, content type, and network considerations. For large files or media that require buffering, the content reference manager may initiate a preloading process to ensure smooth playback or presentation during the meeting.

Additionally, the content reference manager works in conjunction with other components of the meeting service to optimize content delivery. It may coordinate with the application validation service to ensure that necessary applications or plugins are available for content presentation. It also interfaces with the meeting data storage to maintain an up-to-date index of all content associated with each meeting.

By proactively managing and organizing content, the content reference manager significantly reduces the time required to access and share materials during the meeting. This enhances overall productivity by eliminating delays associated with locating and loading content at the start of or during a meeting. The streamlined process allows meeting participants to focus on the discussion rather than technical logistics, thereby improving the efficiency and effectiveness of the meeting experience.

The content reference manager may perform comprehensive analysis on the content to ensure its safety for presentation and distribution. This analysis could include scanning the content for malware or other malicious elements, particularly if the content is hosted externally. The manager may utilize advanced security protocols to verify the integrity and authenticity of the content, checking for any potential threats that could compromise the meeting environment or participants' devices. Additionally, it may assess the content for compliance with organizational policies and regulations, ensuring that sensitive or confidential information is not inadvertently shared with unauthorized participants. The content reference manager could also implement content filtering mechanisms to screen for inappropriate or offensive material, maintaining a professional meeting environment. By conducting these thorough security checks, the content reference manager plays a crucial role in safeguarding the meeting platform and its users, while still enabling seamless content sharing and collaboration.

The application validation service 204 performs a comprehensive set of checks and validations to ensure the meeting environment is fully prepared for presenting the content item, when the meeting begins. Beyond verifying that the appropriate application is loaded, installed, and correctly configured, this service conducts a series of operations to maintain security, compatibility, and optimal performance.

One function is to validate the content sharing application's registration and authorization within the meeting environment. This involves checking that the application is properly registered with the meeting service and has the necessary permissions to operate within the specific meeting context. The service may also verify the application's version to ensure it meets the minimum requirements for compatibility and security.

Additionally, the application validation service performs a thorough assessment of user access privileges. It not only checks that all users have the proper access rights for the shared content item but also verifies that these permissions align with organizational policies and any specific meeting-level access controls. This may include validating user roles, checking for any temporary access grants, and ensuring that external participants have appropriate permissions if applicable.

The service also conducts compatibility checks to ensure that all necessary integrations and plugins required for content presentation are in place and functional. For instance, if a specific application like YouTube is needed for content sharing, the service verifies that the required app or plugin is integrated and operational within the meeting environment.

Furthermore, the application validation service may perform security scans on the content and the sharing application. This could involve checking for potential vulnerabilities, verifying digital signatures, and ensuring compliance with the organization's security protocols. It may also validate that the content adheres to any data loss prevention (DLP) policies in place.

Lastly, the service may conduct performance checks to ensure that the meeting environment can handle the shared content without issues. This could include assessing bandwidth requirements, checking for potential conflicts with other applications, and verifying that the content can be rendered properly across different devices and platforms.

By executing these comprehensive checks, the application validation service plays a crucial role in maintaining the security, integrity, and smooth functionality of the content sharing process, ultimately ensuring a seamless and secure presentation experience for all meeting participants.

The content sync service 206 plays a role during the meeting by ensuring synchronized presentation of content items for all end-users. This service operates by continuously receiving and processing control signals transmitted over the network from the client device of the user managing the content presentation. These control signals serve as commands to navigate or manipulate the shared content in real-time.

For video or audio content, the control signals may include basic playback commands such as play, pause, stop, or fast forward. However, the functionality of the content sync service extends far beyond these simple controls. Depending on the type of content being presented, the control signals can vary significantly in complexity and purpose.

For instance, when presenting a document or spreadsheet, the control signals might include commands for scrolling, zooming, or highlighting specific sections. In a collaborative coding environment, the signals could represent real-time edits, cursor movements, or code execution commands. For interactive presentations or whiteboarding sessions, the control signals might encompass drawing actions, text inputs, or slide navigation.

The content sync service is designed to handle this diverse range of control signals efficiently. Upon receiving a control signal, the service immediately processes it and broadcasts the corresponding action to all connected client devices of the meeting participants. This ensures that every participant's view of the shared content is updated simultaneously, maintaining a cohesive and interactive meeting experience regardless of the participants' physical locations.

Moreover, the content sync service is capable of managing multiple streams of control signals, allowing for scenarios where different participants may have varying levels of interaction with the shared content. For example, while one user navigates through a document, another might be adding comments or annotations. The service coordinates these actions to provide a seamless, real-time collaborative environment.

By facilitating this dynamic and responsive content synchronization, the content sync service significantly enhances the interactive capabilities of the meeting platform, enabling rich, real-time collaboration that closely mimics in-person meetings while overcoming geographical barriers.

It's important to note that the content item could be any type of content for which an application is supported within the meeting environment. This includes not only video and audio files but also documents, spreadsheets, computer programming code, and various other file types. This flexibility allows the system to accommodate a wide range of meeting scenarios and content types, making it a versatile solution for diverse organizational needs, and allowing for real-time collaboration of various content item types.

The meeting service 102 is connected to a storage 110, storing meeting data112. This database serves as a centralized repository for all relevant meeting information, including schedules, participant details, and content references. The robust structure of the meeting service 102, as depicted in FIG. 2, demonstrates the system's capability to efficiently manage the complex tasks associated with content sharing in scheduled meetings.

By separating concerns between meeting management and content management, while providing specialized services for data retrieval, content referencing, application validation, and content synchronization, the architecture enables the system to handle various aspects of integrating external content into meetings seamlessly. This sophisticated design facilitates a smooth user experience, from the initial scheduling and content association to the final presentation during the meeting, addressing the technical challenges of conventional systems by providing a standardized, efficient method for sharing external content in scheduled meetings.

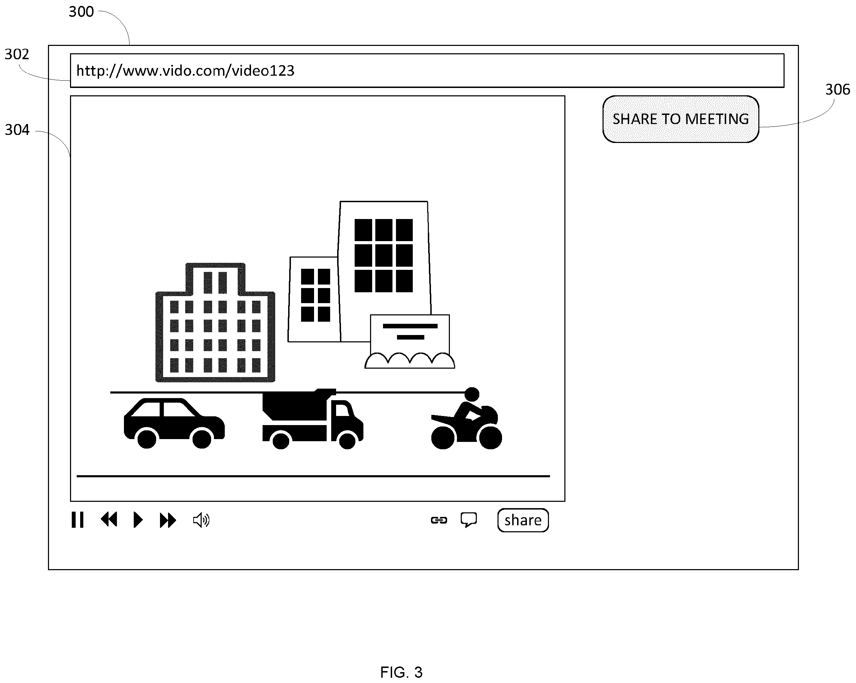

FIG. 3 illustrates a user interface 300 for a content sharing feature integrated into an application, which may be presented on a client device. The interface comprises several key components that facilitate the seamless sharing of content to future-scheduled meetings.

At the top of the interface, an address bar 302 displays the URL "http://www.vido.com/video123", indicating that the user is viewing a specific video content item. This URL serves as the content reference that can be shared to a meeting. The address bar 302 suggests that the user interface is that of a web browser application in this particular example, although it's important to note that the application could be web-based or a locally executed application.

The main content area 304 showcases the video content, which in this case appears to be an animated scene depicting urban elements such as buildings, vehicles, and a motorcycle. This visual representation provides context for the content that the user may wish to share in a future meeting. The content presented in this area, as represented by reference number 304, may be locally hosted on the client device or stored on a remote computing device operated by a third party.

Below the main content area, a set of standard video playback controls is visible, including play, pause, skip, and volume adjustment options. These controls allow the user to interact with the video content before deciding to share it.

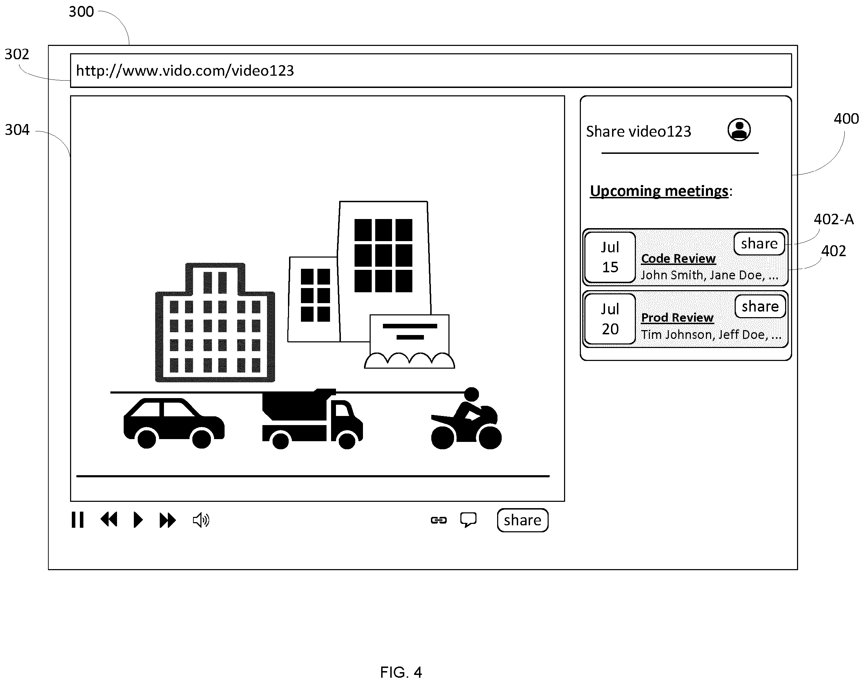

The "SHARE TO MEETING" button 306 is prominently displayed in the upper right corner of the interface. This button serves as the primary user interface element for initiating the content sharing process. When the user is viewing the user interface and wishes to share the content being viewed, they can simply select the button 306 to be presented with a content sharing interface, which will be described and illustrated in FIG. 4.

The presence of this "SHARE TO MEETING" button 306 within the application's interface demonstrates the seamless integration of the meeting service's content sharing capabilities with external applications, whether web-based or locally executed. This integration allows users to easily select and associate content with upcoming meetings directly from the content's source, ensuring that the content is readily accessible when the meeting commences.

FIG. 4 illustrates a detailed view of the content sharing interface 300, which expands upon the user interface shown in FIG. 3. The interface 300 retains the core elements from FIG. 3, including the address bar 302 displaying the URL "http://www.vido.com/video123" and the main content area 304 showing the video content. However, FIG. 4 introduces a new element, the content sharing dialog 400, which appears when the user selects the "SHARE TO MEETING" button 306.

When the user selects the "SHARE TO MEETING" button 306, a request is communicated from the client device to the meeting service for information about future scheduled meetings for the end-user who is viewing the user interface. If the user has not previously been authenticated, they may first need to sign in or authenticate with the meeting service. This authentication process can be facilitated using OAuth or similar services, ensuring secure access to the user's meeting data.

Once authenticated, the request is processed by the meeting service, specifically by the content management component 108. This component uses the user's ID to obtain information about any future scheduled meetings for which the user is a host or has content sharing privileges. The meeting service then returns this data to the client application, which presents the information via the content sharing dialog 400.

In this example, the content sharing dialog 400 displays two future scheduled meetings for the user: one on July 15, as indicated by reference number 402, and another on July 20. Each meeting entry contains several pieces of information, including the date of the meeting, the meeting title (e.g., "Code Review" and "Prod Review"), and a list of participants (e.g., "John Smith, Jane Doe, ..." and "Tim Johnson, Jeff Doe, ..."). In various alternative embodiments, a variety of other information may be available.

The "share" button 402-A associated with each meeting allows the user to select the particular meeting with which the content item is to be associated. When a user selects a meeting by clicking the corresponding "share" button, the system initiates the process of updating the meeting record with the content reference.

This interface provides a streamlined way for users to associate content with upcoming meetings, addressing the technical problem of efficiently integrating external content into scheduled meetings. The design facilitates easy selection of future meetings, enabling users to share content well in advance of the meeting time. This approach eliminates the need for users to remember to share content during the meeting or to switch contexts to external platforms, thereby enhancing the overall efficiency and user experience of the meeting process.

In alternative embodiments, the content sharing interface 400 may include additional control parameters to provide more granular configuration options for how the content is shared and presented during the meeting. For example, the interface may offer an option to specify or designate a particular application that should be used to share or present the content. This feature would allow users to ensure compatibility and optimal presentation of their content within the meeting environment.

Furthermore, the interface could provide functionality for the end-user to designate one or more meeting participants as having the authority or permissions to control the presentation of the content. This capability would enable more collaborative and interactive presentations, where designated participants can navigate, annotate, or manipulate the shared content. During the meeting, these authorized participants would be presented with a customized user interface that includes controls for managing the content presentation. In contrast, other meeting participants without the requisite permissions would be provided with a view-only interface, allowing them to consume the content but not control its presentation.

Additional user interface elements could be incorporated to provide further control over content sharing. These might include options for setting time limits on content visibility, enabling or disabling participant annotations, controlling download permissions for the shared content, or specifying whether the content should be available before or after the scheduled meeting time. The interface could also offer privacy settings, allowing users to restrict content visibility to specific subgroups within the meeting participants. Moreover, integration options could be provided to link the shared content with other collaboration tools or platforms, enhancing the overall meeting experience and productivity.

In some embodiments, the content reference is automatically extracted from information about the user interface being presented. For example, in FIG. 4, the URL "http://www.vido.com/video123" displayed in the address bar 302 serves as the content reference. When the user selects a meeting by clicking the "share" button 402-A, the content sharing interface automatically extracts this URL as the content reference and communicates it to the meeting server. However, alternative embodiments may provide more flexibility in content selection. The user interface may display multiple content items, allowing the user to select a specific item for sharing. Additionally, the interface could include an option for the user to manually input a content reference, such as typing in a name or address for the desired content item. This flexibility enables users to share content from various sources or specify content that may not be directly visible in the current user interface, enhancing the system's versatility in content sharing for future-scheduled meetings.

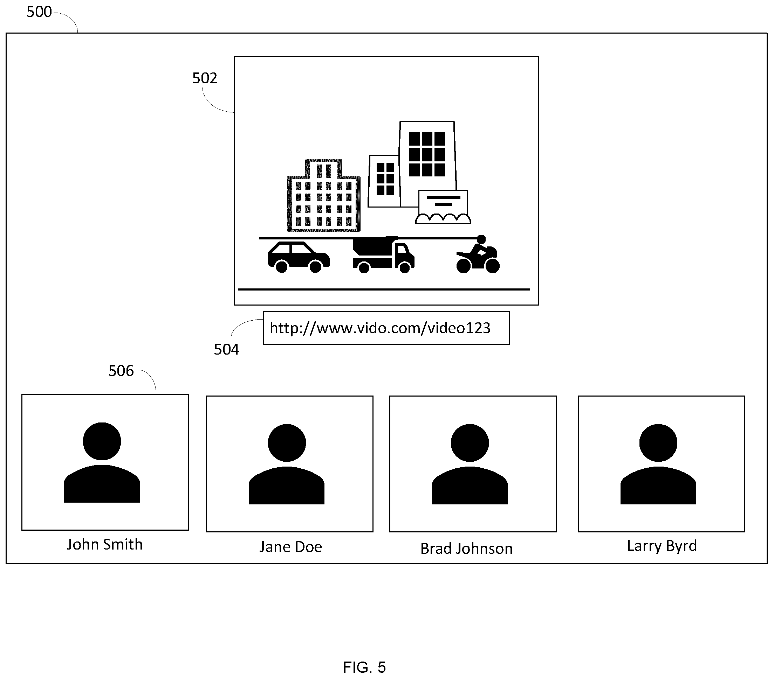

FIG. 5 illustrates a user interface 500 for the meeting service, which is presented to meeting participants during an active meeting. The interface comprises several components that facilitate the seamless sharing and viewing of content during network-based meetings.

The main content area 502 showcases the shared content item, which in this case appears to be the same animated scene depicting urban elements such as buildings, vehicles, and a motorcycle that was previously shown in FIG. 3 and FIG. 4. This visual representation provides the primary focus for the meeting participants, allowing them to collectively view and discuss the shared content.

Below the main content area, a reference bar 504 displays the URL "http://www.vido.com/video123", indicating the source of the shared content item. This reference serves as a reminder of the content's origin and potentially allows participants to access the content directly if needed.

At the bottom of the interface, a series of participant boxes 506 are displayed, each containing a visual representation of a meeting participant. In this example, four participants are shown: John Smith, Jane Doe, Brad Johnson, and Larry Byrd. These boxes are intended to display live video streams of the meeting participants, enabling a more engaging and interactive meeting experience.

It's important to note that in this particular instance, the user interface does not include any control elements for manipulating the shared content. This suggests that the end-user viewing this interface does not have control permissions for the content item. However, in other scenarios, one or more meeting participants may be presented with a different user interface that includes control elements for managing the playback or presentation of the content item.

This differentiation in user interfaces based on control permissions aligns with the system's capability to designate specific participants with the authority to control content presentation. Those with such permissions would likely see additional UI elements, such as playback controls for video content or navigation tools for document-based content. This feature enables more collaborative and interactive presentations while maintaining control over who can manipulate the shared content during the meeting.

The overall design of this interface facilitates a streamlined viewing experience for meeting participants, focusing their attention on the shared content while also maintaining visual connection with other attendees through the video stream boxes. This approach addresses the technical challenge of efficiently integrating external content into ongoing meetings while preserving the interactive nature of network-based collaboration.

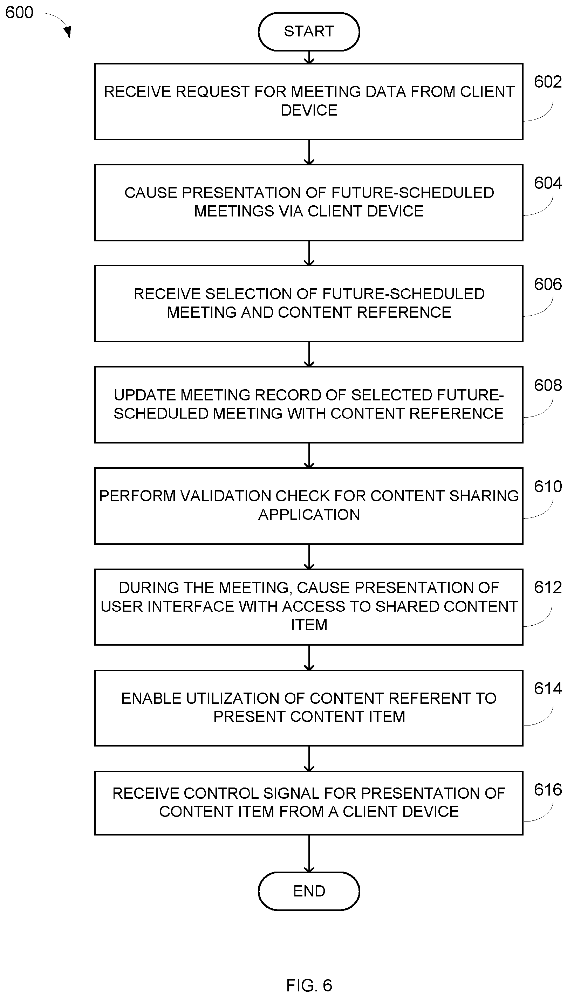

FIG. 6 illustrates a flowchart 600 depicting a method for managing content sharing via a network-based meeting server. The method begins with step 602, which involves receiving a request for meeting data from a client device. This initial step is triggered when a user interacts with a "Share to Meeting" button presented in a user interface associated with a content item. As shown in FIG. 3, this button (306) is typically displayed prominently within the user interface of an application or web page where the content item is being viewed.

When the user selects the "Share to Meeting" button, a request is automatically generated and communicated from the client device to the meeting server. This request typically includes the user's identification information, which is necessary for the server to retrieve the appropriate meeting data.

If the user has not been previously authenticated, the system may first require the user to sign in or authenticate with the meeting service. This authentication process can be facilitated using OAuth or similar services, ensuring secure access to the user's meeting data. Once authenticated, the request is processed by the meeting service, specifically by the content management component 108 as illustrated in FIG. 2. The meeting data retrieval service 200 within this component uses the user's ID to obtain information about any future-scheduled meetings for which the user is a host or has content sharing privileges.

The operation represented by reference number 604 in FIG. 6 involves the meeting server communicating back to the requesting client device information relating to the future scheduled meetings of the user, enabling the presentation of this information in the content sharing interface on the client device. For example, upon receiving the request for meeting data, the meeting service, specifically the content management component 108, processes the request using the meeting data retrieval service 200. This service utilizes the user's ID to perform a lookup operation, retrieving information about any future scheduled meetings for which the user is a host or has content sharing privileges.

The meeting service then compiles a list of relevant future scheduled meetings, including pertinent details such as meeting dates, titles, and participants. This compiled data is then transmitted back to the client device over the network. Upon receiving this data, the client application renders the information within the content sharing dialog 400, as illustrated in FIG. 4. The dialog presents a list of future scheduled meetings, each represented by a distinct entry (402). Each meeting entry typically contains several pieces of information, including the date of the meeting (e.g., "Jul 15" and "Jul 20"), the meeting title (e.g., "Code Review" and "Prod Review"), and a list of participants (e.g., "John Smith, Jane Doe, ..." and "Tim Johnson, Jeff Doe, ..."). This process enables the user to easily view and select from their upcoming meetings directly within the context of the content they wish to share, streamlining the workflow for associating external content with scheduled meetings.

As indicated by reference 606 in FIG. 6, the next operation represents the step of receiving a selection of a future-scheduled meeting and a content reference from the client device. When the user is presented with their future-scheduled meetings in the content sharing interface 400 (as shown in FIG. 4), they can select a specific meeting by clicking the corresponding "share" button (402-A).

Upon selecting a meeting, the client device communicates this selection over the network to the meeting server. Consistent with some examples, the data sent to the server includes:
- A meeting ID corresponding to the selected future-scheduled meeting
- An application ID associated with the web-based application used to access the content item
- A content reference, which is typically a URL (e.g., "http://www.vido.com/video123" as shown in FIG. 4) that points to the content item to be shared

The content reference serves as an identifier for the content to be shared during the selected meeting. This reference allows the meeting service to locate and access the content item, whether it's stored locally on the client device or hosted on a remote server. By receiving this information, the meeting server can associate the selected content with the specific future-scheduled meeting, enabling seamless integration of external content into the meeting when it occurs.

The operation represented by reference number 608 in FIG. 6 involves updating the meeting record of the selected future-scheduled meeting with the content reference. When the meeting server receives the selection of a future-scheduled meeting and the content reference from the client device, it initiates a series of actions to update the meeting record. The content reference manager 202, a component of the content management component 106, adds the reference of the content item to the meeting record. This process involves updating the meeting data 110 stored in the database structure 108 to include the content reference.

In some implementations, the server may take proactive measures to ensure smooth content delivery during the meeting. For instance, it may preload a copy of the content item by using the reference to fetch the content and store it in a location accessible to the meeting server. This preloading ensures immediate availability of the content when the meeting starts, reducing potential delays or technical issues. Additionally, the server may update permissions and access controls specific to the shared content. This step is crucial for maintaining security and ensuring that only authorized participants can access or interact with the content during the meeting. The server may also send notifications to meeting participants about the newly added content, especially if it is added well in advance of the meeting, keeping all participants informed and prepared.

The operation represented by reference number 610 in FIG. 6 involves performing a validation check for the content sharing application. After updating the meeting record, the meeting server performs a comprehensive validation check to ensure the meeting environment is prepared for presenting the content item. This step involves several critical operations carried out by the application validation service 204.

First, it verifies that the appropriate application for sharing the content item is installed and correctly configured in the meeting context. This check ensures that the necessary software infrastructure is in place to support the content sharing. The service also confirms that the content sharing application is properly registered and authorized within the meeting environment. This step is essential for maintaining the integrity and security of the meeting platform.

Furthermore, it verifies that all necessary integrations and plugins required for presenting the content are in place and functional. This comprehensive check helps prevent technical issues that could disrupt the meeting. The validation process extends to user access rights, with the service validating that all users have the proper access privileges for accessing the shared content item.

In some implementations, the server may perform security scans on the content and the sharing application to ensure compliance with organizational security protocols. This additional layer of security helps protect against potential vulnerabilities or malicious content. Lastly, the service may conduct performance checks to ensure that the meeting environment can handle the shared content without issues. This may include assessing bandwidth requirements and checking for potential conflicts with other applications.

The operation represented by reference number 612 in FIG. 6 involves the meeting server causing the presentation of a user interface with access to the shared content item during the meeting. When the scheduled meeting time arrives, the meeting server initiates a series of actions to facilitate the seamless presentation of the shared content. The server activates the meeting environment, establishing the necessary infrastructure for video, audio, and data transmission among participants. It ensures that any required applications or plugins for presenting the content are activated and available within the meeting environment. The server then configures the user interface of the client-based meeting application to present the shared content and the necessary controls for interacting with it.

For the user who initially shared the content, the server automatically opens the side panel of the relevant application by default when they join the meeting. This ensures easy access to the shared content for the presenter. The server also exposes the shared content information to the application, allowing the app to query and display the list of shared content related to that app in the given meeting.

The user interface presented to meeting participants may vary based on their permissions and roles. Participants with control permissions may see additional UI elements, such as playback controls for video content or navigation tools for document-based content. In contrast, participants without specific control permissions may see a view-only interface, allowing them to consume the content but not manipulate its presentation. This differentiated approach ensures that the content is readily accessible within the meeting while maintaining control over who can interact with and present the shared content.

The operation represented by reference number 614 in FIG. 6 involves enabling the utilization of the content reference to present the content item during the meeting. This step is crucial for actualizing the content sharing process that was set up prior to the meeting.

When the meeting is in progress, the meeting server enables the use of the content reference that was previously associated with the meeting record. This reference, typically in the form of a URL or other addressing mechanism, allows the meeting service to locate and access the shared content item. The content item could be stored locally on a client device, on a remote server, or within the meeting service's own storage system.

The meeting server then facilitates the presentation of the content item within the meeting environment. This may involve different processes depending on the nature of the content and the capabilities of the content sharing application. For instance, if the content is a video hosted on a platform like YouTube, the server might use the YouTube app or plugin that was previously validated to render the video within the meeting interface.

For participants with appropriate permissions, the server may provide controls to interact with the content. These controls could include options to play, pause, or navigate through the content, depending on its type. The server ensures that these controls are properly synchronized across all participants' devices to maintain a cohesive viewing experience.

In cases where the content requires specific applications for viewing or interaction, the server utilizes the previously installed and validated applications to present the content. This seamless integration of external content into the meeting environment addresses the technical challenge of efficiently managing diverse content types within network-based meetings.

By enabling the utilization of the content reference in this manner, the meeting server creates a bridge between the pre-meeting content sharing setup and the actual presentation during the meeting, enhancing the overall efficiency and user experience of the collaborative process.

The operation represented by reference number 616 in FIG. 6 involves receiving a control signal for presentation of the content item from a client device during the meeting. This step is for enabling real-time interaction and control over the shared content within the meeting environment. When the meeting is in progress and the content item is ready for presentation, the meeting server is configured to receive control signals from authorized client devices. These control signals may originate from the user who initially shared the content or from other meeting participants who have been granted appropriate permissions.

The control signals can encompass a variety of commands, depending on the nature of the content item and the capabilities of the content sharing application. For instance, if the shared content is a video, the control signals might include commands to play, pause, stop, or navigate through the content. For document-based content, the signals might relate to scrolling, zooming, or highlighting specific portions of the document.

Upon receiving these control signals, the meeting server processes them and applies the corresponding actions to the shared content. This may involve updating the content display for all meeting participants, ensuring that everyone's view of the shared content remains synchronized. The server may also log these interactions for later review or to maintain a record of the meeting's progression.

In some examples, to maintain the integrity and security of the meeting, the server validates each control signal to ensure it originates from an authorized participant and complies with the permissions set for that user. This validation process helps prevent unauthorized manipulation of the shared content and ensures that the presentation proceeds according to the meeting's established protocols.

By implementing this real-time control mechanism, the meeting server facilitates a dynamic and interactive content sharing experience, allowing for collaborative engagement with the shared material during the meeting. This feature addresses the technical challenge of maintaining synchronized, interactive content presentation across multiple remote participants in network-based meetings.

### MACHINE AND SOFTWARE ARCHITECTURE

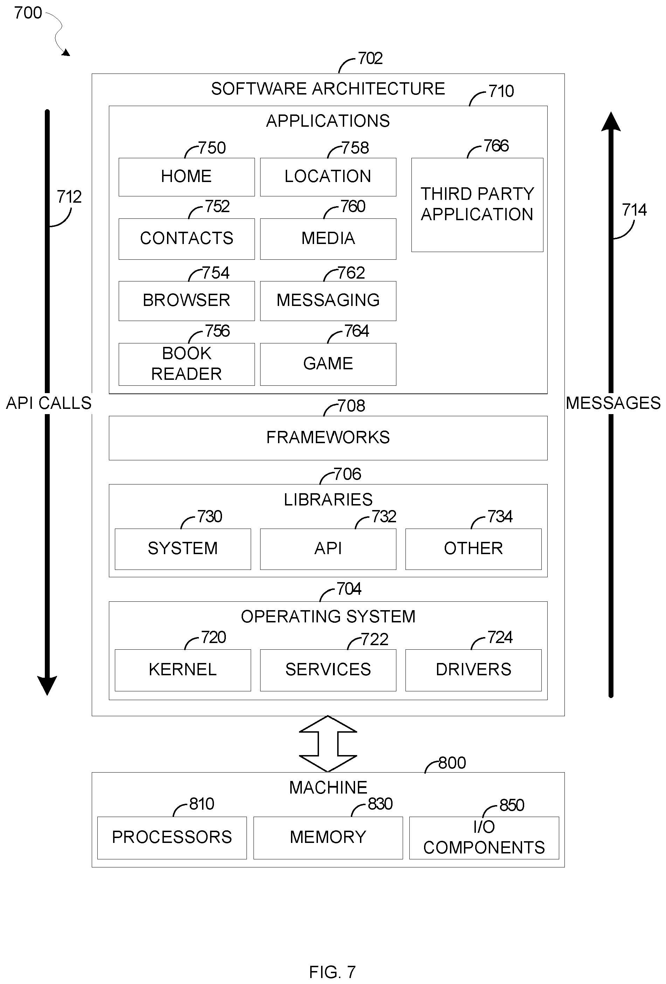

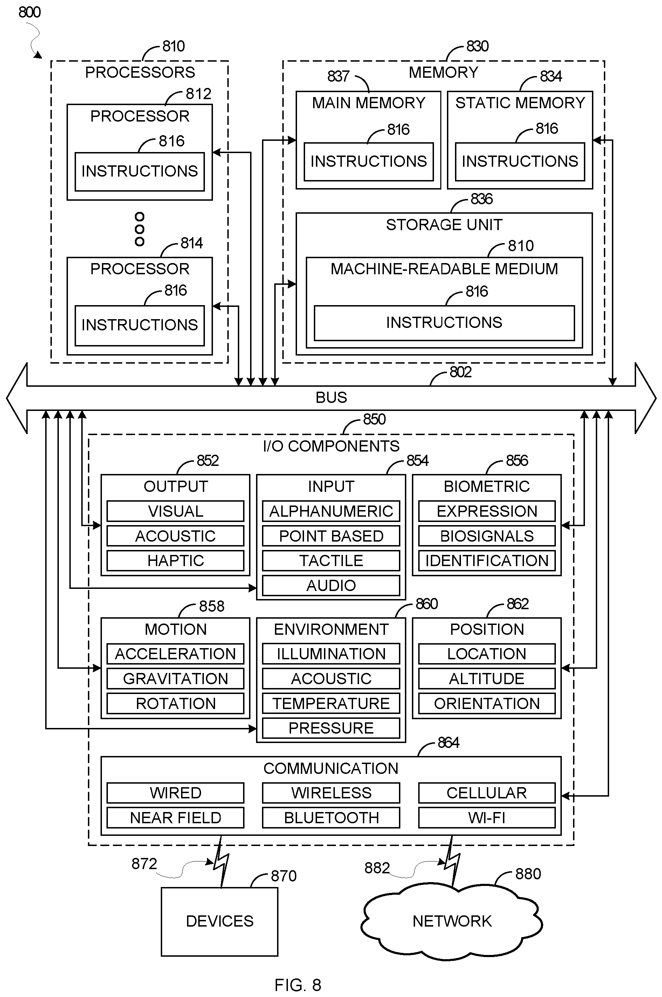

FIG. 7 is a block diagram 700 illustrating a software architecture 702, which can be installed on any of a variety of computing devices to perform methods consistent with those described herein. FIG. 7 is merely a non-limiting example of a software architecture, and it will be appreciated that many other architectures can be implemented to facilitate the functionality described herein. In various embodiments, the software architecture 702 is implemented by hardware such as a machine 800 of FIG. 8 that includes processors 810, memory 830, and input/output (I/O) components 850. In this example architecture, the software architecture 702 can be conceptualized as a stack of layers where each layer may provide a particular functionality. For example, the software architecture 702 includes layers such as an operating system 704, libraries 706, frameworks 708, and applications 710. Operationally, the applications 710 invoke API calls 712 through the software stack and receive messages 714 in response to the API calls 712, consistent with some embodiments.

In various embodiments, the operating system 704 manages hardware resources and provides common services. The operating system 704 includes, for example, a kernel 720, services 722, and drivers 724. The kernel 720 acts as an abstraction layer between the hardware and the other software layers, consistent with some embodiments. For example, the kernel 720 provides memory management, processor management (e.g., scheduling), component management, networking, and security settings, among other functionality. The services 722 can provide other common services for the other software layers. The drivers 724 are responsible for controlling or interfacing with the underlying hardware, according to some embodiments. For instance, the drivers 724 can include display drivers, camera drivers, BLUETOOTH^{®} or BLUETOOTH^{®} Low Energy drivers, flash memory drivers, serial communication drivers (e.g., Universal Serial Bus (USB) drivers), Wi-Fi^{®} drivers, audio drivers, power management drivers, and so forth.

In some embodiments, the libraries 706 provide a low-level common infrastructure utilized by the applications 710. The libraries 706 can include system libraries 730 (e.g., C standard library) that can provide functions such as memory allocation functions, string manipulation functions, mathematic functions, and the like. In addition, the libraries 706 can include API libraries 732 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two dimensions (2D) and three dimensions (3D) in a graphic context on a display), database libraries (e.g., SQLite to provide various relational database functions), web libraries (e.g., WebKit to provide web browsing functionality), and the like. The libraries 706 can also include a wide variety of other libraries 734 to provide many other APIs to the applications 710.

The frameworks 708 provide a high-level common infrastructure that can be utilized by the applications 710, according to some embodiments. For example, the frameworks 708 provide various GUI functions, high-level resource management, high-level location services, and so forth. The frameworks 708 can provide a broad spectrum of other APIs that can be utilized by the applications 710, some of which may be specific to a particular operating system 704 or platform.

In an example embodiment, the applications 710 include a home application 750, a contacts application 752, a browser application 754, a book reader application 756, a location application 758, a media application 760, a messaging application 762, a game application 764, and a broad assortment of other applications, such as a third-party application 766. According to some embodiments, the applications 710 are programs that execute functions defined in the programs. Various programming languages can be employed to create one or more of the applications 710, structured in a variety of manners, such as object-oriented programming languages (e.g., Objective-C, Java, or C++) or procedural programming languages (e.g., C or assembly language). In a specific example, the third-party application 766 (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or another mobile operating system. In this example, the third-party application 766 can invoke the API calls 712 provided by the operating system 704 to facilitate functionality described herein.

FIG. 8 illustrates a diagrammatic representation of a machine 800 in the form of a computer system within which a set of instructions may be executed for causing the machine to perform any one or more of the methodologies discussed herein, according to an example embodiment. Specifically, FIG. 8 shows a diagrammatic representation of the machine 800 in the example form of a computer system, within which instructions 816 (e.g., software, a program, an application, an applet, an app, or other executable code) for causing the machine 800 to perform any one or more of the methodologies discussed herein may be executed. For example the instructions 816 may cause the machine 800 to execute any one of the methods or algorithmic techniques described herein. Additionally, or alternatively, the instructions 816 may implement any one of the systems described herein. The instructions 816 transform the general, non-programmed machine 800 into a particular machine 800 programmed to carry out the described and illustrated functions in the manner described. In alternative embodiments, the machine 800 operates as a standalone device or may be coupled (e.g., networked) to other machines. In a networked deployment, the machine 800 may operate in the capacity of a server machine or a client machine in a server-client network environment, or as a peer machine in a peer-to-peer (or distributed) network environment. The machine 800 may comprise, but not be limited to, a server computer, a client computer, a PC, a tablet computer, a laptop computer, a netbook, a set-top box (STB), a PDA, an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 816, sequentially or otherwise, that specify actions to be taken by the machine 800. Further, while only a single machine 800 is illustrated, the term "machine" shall also be taken to include a collection of machines 800 that individually or jointly execute the instructions 816 to perform any one or more of the methodologies discussed herein.

The machine 800 may include processors 810, memory 830, and I/O components 850, which may be configured to communicate with each other such as via a bus 802. In an example embodiment, the processors 810 (e.g., a Central Processing Unit (CPU), a Reduced Instruction Set Computing (RISC) processor, a Complex Instruction Set Computing (CISC) processor, a Graphics Processing Unit (GPU), a Digital Signal Processor (DSP), an ASIC, a Radio-Frequency Integrated Circuit (RFIC), another processor, or any suitable combination thereof) may include, for example, a processor 812 and a processor 814 that may execute the instructions 816. The term "processor" is intended to include multi-core processors that may comprise two or more independent processors (sometimes referred to as "cores") that may execute instructions contemporaneously. Although FIG. 8 shows multiple processors 810, the machine 800 may include a single processor with a single core, a single processor with multiple cores (e.g., a multi-core processor), multiple processors with a single core, multiple processors with multiples cores, or any combination thereof.

The memory 830 may include a main memory 832, a static memory 834, and a storage unit 836, all accessible to the processors 810 such as via the bus 802. The main memory 830, the static memory 834, and storage unit 836 store the instructions 816 embodying any one or more of the methodologies or functions described herein. The instructions 816 may also reside, completely or partially, within the main memory 832, within the static memory 834, within the storage unit 836, within at least one of the processors 810 (e.g., within the processor's cache memory), or any suitable combination thereof, during execution thereof by the machine 800.

The I/O components 850 may include a wide variety of components to receive input, provide output, produce output, transmit information, exchange information, capture measurements, and so on. The specific I/O components 850 that are included in a particular machine will depend on the type of machine. For example, portable machines such as mobile devices will likely include a touch input device or other such input mechanisms, while a headless server machine will likely not include such a touch input device. It will be appreciated that the I/O components 850 may include many other components that are not shown in FIG. 8. The I/O components 850 are grouped according to functionality merely for simplifying the following discussion and the grouping is in no way limiting. In various example embodiments, the I/O components 850 may include output components 852 and input components 854. The output components 852 may include visual components (e.g., a display such as a plasma display panel (PDP), a light emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 854 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further example embodiments, the I/O components 850 may include biometric components 856, motion components 858, environmental components 860, or position components 862, among a wide array of other components. For example, the biometric components 856 may include components to detect expressions (e.g., hand expressions, facial expressions, vocal expressions, body gestures, or eye tracking), measure bio-signals (e.g., blood pressure, heart rate, body temperature, perspiration, or brain waves), identify a person (e.g., voice identification, retinal identification, facial identification, fingerprint identification, or electroencephalogram-based identification), and the like. The motion components 858 may include acceleration sensor components (e.g., accelerometer), gravitation sensor components, rotation sensor components (e.g., gyroscope), and so forth. The environmental components 860 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 862 may include location sensor components (e.g., a GPS receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 850 may include communication components 864 operable to couple the machine 800 to a network 880 or devices 870 via a coupling 882 and a coupling 872, respectively. For example, the communication components 864 may include a network interface component or another suitable device to interface with the network 880. In further examples, the communication components 864 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 870 may be another machine or any of a wide variety of peripheral devices (e.g., a peripheral device coupled via a USB).

Moreover, the communication components 864 may detect identifiers or include components operable to detect identifiers. For example, the communication components 864 may include Radio Frequency Identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 864, such as location via Internet Protocol (IP) geolocation, location via Wi-Fi^{®} signal triangulation, location via detecting an NFC beacon signal that may indicate a particular location, and so forth.

### EXECUTABLE INSTRUCTIONS AND MACHINE STORAGE MEDIUM

The various memories (i.e., 830, 832, 834, and/or memory of the processor(s) 810) and/or storage unit 836 may store one or more sets of instructions and data structures (e.g., software) embodying or utilized by any one or more of the methodologies or functions described herein. These instructions (e.g., the instructions 816), when executed by processor(s) 810, cause various operations to implement the disclosed embodiments.

As used herein, the terms "machine-storage medium," "device-storage medium," "computer-storage medium" mean the same thing and may be used interchangeably in this disclosure. The terms refer to a single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors. Specific examples of machine-storage media, computer-storage media and/or device-storage media include non-volatile memory, including by way of example semiconductor memory devices, e.g., erasable programmable read-only memory (EPROM), electrically erasable programmable read-only memory (EEPROM), FPGA, and flash memory devices; magnetic disks such as internal hard disks and removable disks; magneto-optical disks; and CD-ROM and DVD-ROM disks. The terms "machine-storage media," "computer-storage media," and "device-storage media" specifically exclude carrier waves, modulated data signals, and other such media, at least some of which are covered under the term "signal medium" discussed below.

### TRANSMISSION MEDIUM

In various example embodiments, one or more portions of the network 880 may be an ad hoc network, an intranet, an extranet, a VPN, a LAN, a WLAN, a WAN, a WWAN, a MAN, the Internet, a portion of the Internet, a portion of the PSTN, a plain old telephone service (POTS) network, a cellular telephone network, a wireless network, a Wi-Fi^{®} network, another type of network, or a combination of two or more such networks. For example, the network 880 or a portion of the network 880 may include a wireless or cellular network, and the coupling 882 may be a Code Division Multiple Access (CDMA) connection, a Global System for Mobile communications (GSM) connection, or another type of cellular or wireless coupling. In this example, the coupling 882 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard-setting organizations, other long range protocols, or other data transfer technology.

The instructions 816 may be transmitted or received over the network 880 using a transmission medium via a network interface device (e.g., a network interface component included in the communication components 864) and utilizing any one of a number of well-known transfer protocols (e.g., HTTP). Similarly, the instructions 816 may be transmitted or received using a transmission medium via the coupling 872 (e.g., a peer-to-peer coupling) to the devices 870. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 816 for execution by the machine 800, and includes digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a matter as to encode information in the signal.

### COMPUTER-READABLE MEDIUM

The terms "machine-readable medium," "computer-readable medium" and "device-readable medium" mean the same thing and may be used interchangeably in this disclosure. The terms are defined to include both machine-storage media and transmission media. Thus, the terms include both storage devices/media and carrier waves/modulated data signals.

## Claims

1. A computer-implemented method for managing content sharing via a network-based meeting server, the method comprising:
receiving, by the meeting server and from a client device, a request for meeting data indicating one or more future-scheduled meetings of an end-user, the request communicated from the client device to the meeting server as a result of the client device detecting an interaction with a user interface element included in a first user interface presented via the client device;
causing presentation via the first user interface at the client device of at least one future-scheduled meeting;
receiving, over a network and by the meeting server, data indicating a selection of a future-scheduled meeting and a reference corresponding with a content item to be shared in the selected future-scheduled meeting;
updating, by the meeting server, a meeting record for the selected future-scheduled meeting to include the reference corresponding with the content item;
during the meeting, causing, by the meeting server, a client device of one or more meeting participants to present a user interface that provides access to the content item corresponding with the reference;
enabling, by the meeting server, a client device of the one or more meeting participants to utilize the reference corresponding with the content item to cause presentation of the content item via the client device.

2. The computer-implemented method of claim 1, wherein:
the first user interface comprises a web page served by a third-party server and the user interface element is an embedded component in the web page that, when interacted with, causes the client device to communicate with the meeting server;
the content item is displayed within the web page; and
the reference corresponding with the content item comprises an addressing mechanism that enables access to the content item via the network, wherein the content item is stored and accessible at least one of:
a third-party computing device separate from the meeting server and the client device; or
the client device.

3. The method of claim 2, wherein the first user interface comprises a content page for the content item as served by a third-party server and the user interface element is an embedded component in the content page that, when interacted with, initiates a request to the meeting server for future-scheduled meetings, the method further comprising:
upon receiving the request, the meeting server retrieves meeting data for the end-user and transmits the meeting data to the client device causing the client device to render the meeting data within the first user interface by presenting a list of available future-scheduled meetings;
wherein the data indicating a selection of a future-scheduled meeting is generated when the client device detects a user interaction with a selectable element corresponding to one of the presented future-scheduled meetings and the reference corresponding with the content item comprises a link associated with the content item displayed within the content page.

4. The method of claim 1, further comprising:
pre-loading, by the meeting server, a copy of the content item by:
using the reference corresponding with the content item to fetch a copy of the content item; and
storing the copy of the content item in storage accessible to the meeting server to enable immediate presentation of the content item by the meeting server at the time the meeting is initiated.

5. The method of claim 1, wherein the reference corresponding with the content item is communicated from the client device to the meeting server by:
sending the reference corresponding with the content item based on content being presented to the end-user via the first user interface at the time the client device detects the interaction with the user interface element to select the future-scheduled meeting; or
the end-user providing or specifying the reference corresponding with the content item via a portion of the first user interface associated with the user interface element.

6. The method of claim 1, further comprising:
sending, by the meeting server, a notification to a meeting invitee of the selected meeting, the notification including the reference to the content item and indicating that the content item is to be presented during the selected meeting.

7. The method of claim 1, further comprising:
performing, by the meeting server, a validation check to determine whether an application for sharing the content item during the selected meeting is installed and configured for use;
if the application is installed, verifying, by the meeting server, that the application is properly configured for use during the selected future-scheduled meeting, wherein the verification includes:
checking that necessary permissions are set for the application to access and share the content item,
confirming that required integrations and plugins for presenting the content item are functional, and
validating that the application has appropriate access rights within the meeting context;
generating, by the meeting server, a validation result indicating whether the application is installed and properly configured for use; and
storing, by the meeting server, the validation result in association with the meeting record for the selected future-scheduled meeting.

8. The method of claim 1, further comprising:
during the meeting, causing, by the meeting server, a client device of one or more meeting participants to present a user interface that includes interactive presentation controls associated with the content item, wherein:
the interactive presentation controls enable the one or more meeting participants to:
initiate presentation of the content item at the outset of the meeting,
control playback of the content item during the meeting, including at least one of: play, pause, stop, or navigate through the content, and
modify the presentation of the content item, including at least one of:
zooming, scrolling, or highlighting portions of the content item;
the meeting server receives, from the client device, data indicating interactions with the interactive presentation controls; and
the meeting server processes the received data to synchronize the presentation of the content item across client devices of all meeting participants in real-time.

9. A system for managing content sharing via a network-based meeting server, the system comprising:
at least one processor;
at least one memory storage device storing instructions thereon, which, when executed by the at least one processor, cause the system to perform the method of any preceding claim.

10. Software configured to cause a computer system to carry out the method of any of claims 1 to 8.
